# EUROPEAN PATENT SPECIFICATION

(11) **EP 2 589 912 B1**
(45) Date of publication and mention of the grant of the patent: **11.01.2017**
(21) Application number: 10853939.6
(22) Date of filing: 16.09.2010
(51) Int. Cl.: F28D 1/04, F28F 21/08, F28F 19/02

(54) **COMBINED FINNED TUBE ANTI-CORROSION HEAT EXCHANGE DEVICE**
KOMBINIERTE KORROSIONSBESTÄNDIGE RIPPENROHR-WÄRMETAUSCHERVORRICHTUNG
DISPOSITIF D'ÉCHANGE THERMIQUE ANTICORROSION À TUBE À AILETTES COMBINÉ

(30) Priority: 01.07.2010 CN 201010223963
(43) Date of publication of application: 08.05.2013
(73) Proprietor: Beijing University of Civil Engineering and Architecture, Beijing 100044 (CN); Dalian University of Technology, Dalian, Liaoning 116012 (CN)
(72) Inventor: WANG, Suilin, Beijing 100044 (CN); LIU, Guichang, Dalian Liaoning 116012 (CN); PAN, Shuyuan, Beijing 100044 (CN)
(74) Representative: Epping - Hermann - Fischer
(86) International application number: PCT/CN2010/076976
(87) International publication number: WO 2012/000236

(56) References cited:
- CN-A- 1 800 768
- CN-A- 101 403 580
- CN-U- 201 697 496
- CN-Y- 2 527 951
- GB-A- 974 302
- JP-A- S6 179 998
- JP-A- 2000 026 768
- JP-A- 2002 310 576
- JP-A- 2003 161 595
- US-A- 4 275 705
- US-A1- 2002 144 806
- US-A1- 2003 106 676

## Description

### Field of the Invention

The present invention relates to a heat exchange device for recycling condensation heat of flue-gas for gas-consuming apparatus such as natural gas boiler furnace, gas direct-fired machine and natural gas combined thermal power generation device and a condensing heat exchanger for condensation-type gas-consuming apparatus such as condensation-type natural gas boiler furnaces or direct-fired machines. Particularly, it relates to a heat exchange device of a combined anti-corrosion system utilizing flue-gas condensation heat and belongs to the field of heat transfer and mass transfer enhanced metal anti-corrosion technique and energy conservation.

### Background

For gas-consuming apparatus such as common natural gas boilers and direct-fired machines and natural gas combined thermal power generation, the flue gas temperature is above 100°C, which leads to energy wasting and pollution and which has a typical thermal efficiency less than 90%.

By adding a flue gas condensing heat exchanger at the end of a gas-consuming apparatus to lower the flue gas temperature to below the dew-point temperature of flue gas, it can not only utilize sensible heat of exhaust flue-gas, but also utilize the large quantity of latent heat released when a large amount of vapor generated during gas combustion condensing, resulting in 10∼20% enhancement of thermal efficiency. Theoretically, recycling latent heat of water vapor may increase thermal inefficiency by 11%, thereby saving energy and reducing release of noxious gases. At the same time, the condensate may solve and absorb a portion of noxious gases such as COX, NOX, SOX in the exhaust flue-gas, which is a certain cleaning effect for the flue gas. Therefore, researching and developing flue gas condensation heat recycling devices, developing condensation-type gas-consuming apparatus or modifying common gas-consuming apparatus as condensation-type systems is the most effective way to efficiently utilize natural gas and reduce environment pollution. Therefore, researching and developing flue gas condensing heat exchangers or heat exchange devices has become a hotspot topic in thermal science and energy environment engineering.

Since the vapor condensate dissolves a portion of noxious gases in the flue gas to form a highly acidic corrosive fluid containing nitrate radicals, nitrites, chlorates and sulfate ions, which may corrode the exchanger and shorten its service life. At the same time, a condensation-type gas-consuming apparatus is usually required to be compact in structure, low profile, light weight and low cost. Therefore, for condensation heat transfer equipments, anti-corrosion techniques and heat transfer mass transfer enhanced technology as well as integration technology for increasing service life, reducing costs and carbon emission become a technical key in developing condensation-type gas-consuming apparatus.

At present, condensing heat exchangers or devices are conventionally manufactured using materials such as cast aluminum, aluminum alloy, nickel alloy, stainless steel and Teflon as heat exchange materials. This kind of heat-exchange equipments suffer difficult machining, high cost, poor heat-transfer capability of materials, which goes against compaction of equipments. Meanwhile, the devices are designed without any concerns for, e.g., from optimization of material selection for parts of the equipments to surface treatment, improving performance and reducing costs to the most extent, which brings about limitation on application of these products due to high costs.

Heat exchanger corrosion is mainly a kind of electro-chemical corrosion and the heat exchange tube is the key section for corrosion protection since water leakage may occur once the tube is pierced. In view of this, optimization and combination for materials and surface protection means are applied, a strategy of intensified protection for key sections is implemented, a material with high potential in condensate is selected for the condenser tube and a material with low potential is selected for fins, or surface modification are carried out on the heat exchange tube, in order to realize electrochemical protection. This has great significance for ensuring safe operation of heat exchange devices and reducing costs to the maximum extent.

Optimization and combination by means of comprehensive utilization of corrosion resistance, thermal conductivity, mechanical property and economy among physical chemistry performances of different materials and coated layers is an update of design ideas for researching and developing these devices and will result in fundamental improvements for the practicability and economy of these products.

JP 2002-310576 A describes a heat exchanger with a plurality of plate-form fins. A tube is joined with the fins. The heat exchanger may be used as an intercooler for an engine in a motorboat or a recreational watercraft.

US 2002/0144806 A1 describes a similar heat exchanger, wherein the intercooler assumes a simple structure that is capable of cooling supercharging air and absorbing expansion/contraction of the cooling water pipe and the casing caused by the heat of the supercharging air.

US 4,275,705 A describes a two-stage heat exchanger for hot air heating systems using flue gas. The thinned tubes are coated with Teflon.

### Summary

### Technical problem

In view of the features that corrosion on condensing heat exchangers is mainly electro-chemical corrosion, fins have large area, and much coating materials will be consumed when plating the fins, and under a strategy of intensified protection for key section, an object of the present invention is to provide a set of combined anti-corrosion heat exchange device utilizing flue gas condensation heat for which combinatorial optimization is conducted with respect to the materials and surface protection, that is, selecting a material with high corrosion potential in condensate for fins' base tube and selecting a material with low corrosion potential for the fins or surface modifying the fins' base tube to realize electrochemical protection for the fins' base tube, which, under the precondition of ensuring safe operation of heat exchange devices, reduces manufacturing cost of products to the maximum extent and thus further improve practicability and economy of this kind of products.

### Technical Solution

Now the technical solution of the present invention is described.

A combined finned tube anti-corrosion heat exchange device utilizing flue gas condensation heat comprises one of the following two different types. Each type of anti-corrosion heat exchange device consists of a base tube for fins, and fins with different material and free-corrosion potential from the base tube and an anti-corrosion coating, and the fins have a free-corrosion potential lower than that of the base tube. Said two types of anti-corrosion heat exchange devices of different combinations include:
a. a red copper pipe is used as the base tube for fins of the anti-corrosion heat exchange device, a copper sheet or aluminum alloy sheet is used for the fins, a layer of amorphous nickel-copper-phosphorus composite deposit with sodium molybdate as additive is first plated on the surface of the red copper pipe and then an organic coating is applied to the entire surfaces of the finned tube and the fins; and
b. a brass pipe is used as the base tube for fins of the anti-corrosion heat exchange device, an aluminum alloy sheet is used for the fins, a layer of amorphous nickel-copper-phosphorus composite deposit with sodium molybdate as additive is first plated on the surface of the brass tube and then an organic coating is applied to the entire surface of the finned tube and the fins.

The organic coating described in the present invention may be fluororesin, polyurethane, fluorocarbon resin or organic silicon coating.

### Beneficial Effects

Compared with prior art, the present invention has the following advantages and remarkable effects: in view of the feature that corrosion on condensing heat exchanger is mainly electro-chemical corrosion, the fins have large area, and much coating materials is consumed when being plated, and with the strategy of intensified protection for key sections, the present invention optimizes and combines materials and surface protection, that is, according to the cathode protection and enhanced heat exchange principle and different manufacturing conditions and economic requirements, the combination of materials and anti-corrosion coatings with good heat transfer property and different corrosion potentials is optimized to construct a combined anti-corrosion heat exchange device with reliable anti-corrosion and efficient heat exchange. The present invention gives full play to prominent physicochemical properties of different materials and coatings such as corrosion resistance, heat transfer and machining, providing the device with advantages such as simple production, low cost, good heat transfer and corrosion resistance, which under the precondition of ensuring safe operation of heat exchange devices, reduces manufacturing cost to the maximum extent and thus further improves practicability and economy of this kind of products. It may be used for recycling flue gas condensation heat for gas-consuming apparatus such as natural gas boiler furnace, direct-fired machine and natural gas combined thermal power generation, also be used for a condensing heat exchanger for a condensation-type gas-consuming apparatus such as condensation-type natural gas boiler furnaces and gas direct-fired machines, and condensation-type natural gas water heater/furnace.

### Brief Description of Drawings

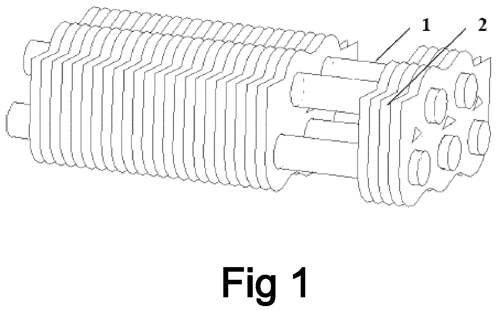

Fig. 1 is a diagram showing the overall configuration of the heat exchange device of the combined anti-corrosion system utilizing flue gas condensation heat according to the present invention.

### Detail Description

The present invention will be described in detail below with reference to drawings.

The combined anti-corrosion heat exchange device utilizing flue gas condensation heat according to the present invention has two different types. Each type of anti-corrosion heat exchange device consists of a base tube for fins 1, fins 2 with different material and free-corrosion potential from the finned tube 1 and an anti-corrosion coating, and the fins have a free-corrosion potential lower than that of the finned tube. Several types of anti-corrosion heat exchange devices of different combinations include:
a. The first type of combined finned tube anti-corrosion heat exchange device: a red copper pipe is used as the base tube for fins of the anti-corrosion heat exchange device, copper sheet or aluminum alloy sheet is used for the fins. A layer of amorphous nickel-copper-phosphorus composite deposit with sodium molybdate as additive is plated on the surface of the red copper finned tube and then an organic coating is applied to the entire surfaces of the finned tube and fins. In manufacturing, the red copper finned tube and fins are made separately and their surfaces are pretreated (decontamination). Thereafter, a layer of amorphous nickel-copper-phosphorus composite deposit with sodium molybdate as additive is applied (by chemical plating or electroplating) on the external surface of the red copper base tube for fins. Then, a finned tube heat exchanger is manufactured using copper sheets or aluminum alloy fins, finally a layer of organic coating is applied to the surface of the finned tube heat exchanger. Fluororesin, polyurethane, fluorocarbon resin or organic silicon coating are generally used as the organic coating.
In a case where the chemical plating is employed, generally, the amorphous nickel-copper-phosphorus chemically composite deposit with sodium molybdate as additive is plated under conditions of normal pressure and temperature of 80∼90 °C, with a plating solution having the following components and contents:

| | |
|---|---|
| NiSO₄•7H₂O : | 40 ∼ 57g/L, |
| NaH₂PO₄•H₂O: | 20 ∼ 30g/L |
| sodium citrate: | 35 ∼ 45g/L |
| CuSO₄•5H₂O: | 0.5 ∼ 1.5g/L |
| NH₄Ac: | 30 ∼ 40g/L |
| NH₄F: | 1 ∼ 2g/L |
| Na₂MoO₄•2H₂O: | 1∼5mg/L; |

The pH of said plating solution is controlled to be 7∼9.
The thickness of the composite deposit should be determined based on years of corrosion resistance required for the product.
b. The second type of combined finned tube anti-corrosion heat exchange device: A brass pipe is used as the base tube for fins of the anti-corrosion heat exchange device. Aluminum alloy sheet is used for the fins. A layer of amorphous nickel-copper-phosphorus composite deposite with sodium molybdate as additive is plated on the surface of the brass finned tube, and then an organic coating is applied to the entire surfaces of the finned tube and fins. Manufacturing method for it is the same as the first type.

The above-mentioned types of combined finned tube anti-corrosion heat exchange devices according to the present invention are provided with the following concerns, firstly, corrosion on a condensing heat exchanger is mainly electro-chemical corrosion, the fins have large area, and much coating materials is consumed; secondly, a technical solution of intensified protection for key section is employed, the combination of material selection and surface protection is optimized, that is, selecting a material with high free-corrosion potential in condensate for the condenser tube and selecting a material with low free-corrosion potential for the fins or surface modifying the heat exchange tube, so as to realize electrochemical protection for the heat exchange tube. This has great significance for not only ensuring safe operation of heat exchange devices, but also simplifying processing technology, saving materials and energy consumption in the manufacturing procedure and reducing product cost to the maximum extent. A user can select a respective product according to different requirements on initial outlay and performance.

## Claims

1. A combined finned tube anti-corrosion heat exchange device utilizing flue gas condensation heat, comprising one of the following two types of different combinations, wherein each type of anti-corrosion heat exchange device consists of a base tube (1) for fins, and fins (2) with different material and free-corrosion potential from the base tube and an anti-corrosion coating, and the fins (2) have a free-corrosion potential lower than that of the base tube (1), said two types of anti-corrosion heat exchange devices of different combinations include:
a. a red copper pipe is used as the base tube (1) for fins of the anti-corrosion heat exchange device, a copper sheet or aluminum alloy sheet is used for the fins (2), a layer of amorphous nickel-copper-phosphorus composite deposit with sodium molybdate as additive is first plated on the surface of the red copper pipe and then an organic coating is applied to the entire surface of the base tube (1) and the fins (2); and
b. a brass pipe is used as the base tube (1) for fins of the anti-corrosion heat exchange device, an aluminum alloy sheet is used for the fins (2), a layer of amorphous nickel-copper-phosphorus composite deposit with sodium molybdate as additive is first plated on the surface of the brass pipe and then an organic coating is applied to the entire surface of the base tube (1) and the fins (2).

2. The combined finned tube anti-corrosion heat exchange device utilizing flue gas condensation heat according to claim 1, wherein the organic coating is fluororesin, polyurethane, fluorocarbon resin or organic silicon coating.

## Patentansprüche

1. Kombinierte korrosionsbeständige Rippenrohr-Wärmetauschervorrichtung, die Rauchgas-Kondensationswärme nutzt, aufweisend eine der zwei Arten von unterschiedlichen Kombinationen, wobei jede Art von korrosionsbeständiger Wärmetauschervorrichtung aus einem Grundrohr (1) für Finnen, und Finnen (2) mit unterschiedlichem Material und rostfreiem Potential von dem Grundrohr und einem korrosionsbeständigen Überzug besteht, und die Finnen (2) ein korrosionsbeständiges Potential besitzen, das geringer ist als das des Grundrohrs (1), wobei besagte zwei Arten von korrosionsbeständigen Wärmetauschervorrichtungen unterschiedlicher Kombinationen umfassen:
a. ein Rotkupfer-Rohr wird als Grundrohr (1) für Finnen der korrosionsbeständigen Wärmetauschervorrichtung verwendet, ein Kupferblech oder ein Blech aus einer Aluminiumlegierung wird für die Finnen (2) verwendet, eine Schicht aus einer amorphen Nickel-Kupfer-Phosphor-Verbundabscheidung mit Natriummolybdat als Additiv wird zunächst auf die Oberfläche des Messingrohres plattiert und dann wird eine organische Beschichtung auf die gesamte Oberfläche des Grundrohrs (1) und der Finnen (2) aufgebracht; und
b. ein Messingrohr wird als Grundrohr (1) für Finnen der korrosionsbeständigen Wärmetauschervorrichtung verwendet, ein Blech aus einer Aluminiumlegierung wird für die Finnen (2) verwendet, eine Schicht aus einer amorphen Nickel-Kupfer-Phosphor-Verbundabscheidung mit Natriummolybdat als Additiv wird zunächst auf die Oberfläche des Messingrohrs plattiert und dann wird eine organische Beschichtung auf die gesamte Oberfläche des Grundrohrs (1) und der Finnen (2) aufgebracht.

2. Kombinierte korrosionsbeständige Rippenrohr-Wärmetauschervorrichtung, die Rauchgas-Kondensationswärme nutzt, nach Anspruch 1, wobei die organische Beschichtung ein Fluorharz, Polyurethan, Fluorkohlenstoffharz oder eine Beschichtung aus organischem Silizium ist.

## Revendications

1. Dispositif échangeur de chaleur anticorrosion à tube à ailettes combiné utilisant la chaleur de condensation de gaz de combustion, comprenant un des deux types suivants de combinaisons différentes, dans lequel chaque type de dispositif échangeur de chaleur anticorrosion consiste en un tube de base (1) pour des ailettes, et en des ailettes (2) avec un matériau et un potentiel de résistance à la corrosion différents par rapport au tube de base et un revêtement anticorrosion, et les ailettes (2) présentent un potentiel de résistance à la corrosion inférieur à celui du tube de base (1), lesdits deux types de dispositifs échangeurs de chaleur anticorrosion de combinaisons différentes comprenant :
a. une conduite de cuivre rouge utilisée comme le tube de base (1) pour des ailettes du dispositif échangeur de chaleur anticorrosion, une feuille de cuivre ou feuille en alliage d'aluminium utilisée pour les ailettes (2), une couche de dépôt composite amorphe nickel-cuivre-phosphore avec du molybdate de sodium comme additif plaquée en premier à la surface de la conduite de cuivre rouge, puis un revêtement organique appliqué sur toute la surface du tube de base (1) et les ailettes (2), et
b. une conduite en laiton utilisée comme le tube de base (1) pour des ailettes du dispositif échangeur de chaleur anticorrosion, une feuille d'alliage d'aluminium utilisée pour les ailettes (2), une couche de dépôt composite amorphe nickel-cuivre-phosphore avec du molybdate de sodium comme additif plaquée en premier à la surface de la conduite en laiton, puis un revêtement organique appliqué sur toute la surface du tube de base (1) et les ailettes (2).

2. Dispositif échangeur de chaleur anticorrosion à tube à ailettes combiné utilisant la chaleur de condensation de gaz de combustion selon la revendication 1, dans lequel le revêtement organique est une fluororésine, un polyuréthane, une résine fluorocarbonée ou un revêtement de silicium organique.
